# EUROPÄISCHE PATENTSCHRIFT

(11) **EP 3 269 580 B1**
(45) Veröffentlichungstag und Bekanntmachung des Hinweises auf die Patenterteilung: **01.09.2021**
(21) Anmeldenummer: 17178838.3
(22) Anmeldetag: 29.06.2017
(51) Int. Cl.: B60K 37/06

(54) **VERFAHREN ZUM BETREIBEN EINES FAHRZEUGINFORMATIONSSYSTEMS UND FAHRZEUGINFORMATIONSSYSTEM EINES FAHRZEUGS**
METHOD FOR OPERATING A VEHICLE INFORMATION SYSTEM AND VEHICLE INFORMATION SYSTEM OF A VEHICLE
PROCÉDÉ DE FONCTIONNEMENT D'UN SYSTÈME D'INFORMATIONS DE VÉHICULE ET SYSTÈME D'INFORMATIONS DE VÉHICULE POUR UN VÉHICULE

(30) Priorität: 15.07.2016 DE 102016113111
(43) Veröffentlichungstag der Anmeldung: 17.01.2018
(73) Patentinhaber: VOLKSWAGEN AKTIENGESELLSCHAFT, 38440 Wolfsburg (DE)
(72) Erfinder: BRAUN, Anna, 38114 Braunschweig (DE)
(74) Vertreter: Reitstötter Kinzebach

(56) Entgegenhaltungen:
- DE-A1-102008 016 527
- JP-A- 2007 064 761
- JP-A- 2014 156 189

## Beschreibung

Die vorliegende Erfindung betrifft ein Verfahren zum Betreiben eines Fahrzeuginformationssystems eines Fahrzeugs sowie ein Fahrzeuginformationssystem eines Fahrzeugs.

Zur Verbesserung der Sicherheit und des Komforts beim Fahren mit einem Fahrzeug wird einem Nutzer eines Fahrzeugs eine Fülle von Informationen bereitgestellt, beispielsweise um die Überwachung der Fahrt und des Fahrzeugbetriebs zu erleichtern, über die Tätigkeit von Fahrerassistenzsystemen zu informieren oder um die Bewältigung organisatorischer Nebenaufgaben zu erleichtern. Dabei werden in modernen Fahrzeugen zunehmend komplexe Rechensysteme integriert, die bei der Inbetriebnahme des Fahrzeugs und zu Beginn einer Fahrt gestartet und hochgefahren werden müssen. Bei bekannten Systemen treten hierbei häufig unerwünschte Verzögerungen und Wartezeiten auf, ehe der Fahrer die gewünschte Bedienung vornehmen oder bestimmte Informationen abrufen kann.

In dem Dokument JP 2007 064761 A wird eine Anzeigevorrichtung beschrieben, bei deren Start ein animierter Übergang von einem Logo zu einer Anzeige mit unterschiedlichen Informationen zum Betrieb eines Fahrzeugs ausgegeben wird. Beim Starten des Systems werden verschiedene Informationen zeitlich verzögert zur Verfügung gestellt und die Animation ist so gestaltet, dass die entsprechenden Informationen nacheinander erst dann sichtbar werden, wenn sie tatsächlich verfügbar sind.

Das Dokument JP 2014 156189 A beschreibt eine animierte Anzeige in einem Kombiinstrument, bei der nach dem Starten des Fahrzeugs zunächst ein Fahrzeugsymbol dargestellt wird. Es wird das Erscheinen eines Fensters mit Audio-Einstellungen simuliert, wobei das Fenster von hinter dem Fahrzeug kommend in den Vordergrund der Darstellung gebracht wird.

Der vorliegenden Erfindung liegt die Aufgabe zugrunde, ein Verfahren zum Betreiben eines Fahrzeuginformationssystems und ein Fahrzeuginformationssystem der oben genannten Art bereitzustellen, bei denen einem Nutzer die Systemtätigkeit besonders leicht erfassbar ausgegeben wird.

Erfindungsgemäß wird diese Aufgabe durch ein Verfahren mit den Merkmalen des Anspruchs 1 und ein Fahrzeuginformationssystem mit den Merkmalen des Anspruchs 14 gelöst. Vorteilhafte Ausgestaltungen und Weiterbildungen ergeben sich aus den abhängigen Ansprüchen.

Bei dem erfindungsgemäßen Verfahren zum Betreiben eines Fahrzeuginformationssystems wird ein Aktivierungssignal empfangen, wenn eine Vorbereitungshandlung eines Nutzers zur Inbetriebnahme des Fahrzeugs erfasst wird. In Abhängigkeit von dem Aktivierungssignal werden Grafikdaten einer Aktivierungsanimation mit einer ersten und einer zweiten Darstellung erzeugt und durch eine Anzeigefläche angezeigt. Dabei wird nach dem Empfangen des Aktivierungssignals ein Erscheinen der ersten Darstellung ausgegeben, wobei die erste Darstellung ein erstes Grafikobjekt umfasst. Anschließend wird ein Verschwinden der ersten Darstellung und ein Erscheinen der zweiten Darstellung ausgegeben.

Die Aktivierungsanimation kann dabei vorteilhafterweise als Warteanimation genutzt werden, um eine Wartezeit für den Nutzer zu überbrücken und eine Tätigkeit des Systems zu signalisieren.

Die Vorbereitungshandlung eines Nutzers zur Inbetriebnahme des Fahrzeugs, die bei dem erfindungsgemäßen Verfahren erfasst wird, kann unterschiedlich ausgebildet sein und auf an sich bekannte Weise erfasst werden. Insbesondere sind hiervon Handlungen eines Nutzers oder auf ihn bezogene Zustände umfasst, die auf eine Intention hinweisen, das Fahrzeug in Betrieb zu nehmen und insbesondere eine Fahrt mit dem Fahrzeug anzutreten.

Gemäß einer Ausbildung des erfindungsgemäßen Verfahrens umfasst die erfasste Vorbereitungshandlung einen Annäherungsvorgang, einen Entriegelungsvorgang, ein Türöffnen, ein Einsteigen oder Setzen des Nutzers oder ein Starten des Fahrzeugs. Dadurch wird die Aktivierungsanimation vorteilhafterweise mit besonders wichtigen Schritten zur Vorbereitung einer Fahrt mit dem Fahrzeug synchronisiert. Zudem kann anhand derart empfangener Signale bestimmt werden, ob sich der Fahrer in einer bestimmten Phase der Vorbereitung auf die Fahrt mit dem Fahrzeug befindet.

Das Aktivierungssignal, dass bei dem Verfahren empfangen wird, kann beispielsweise durch eine Einheit erzeugt und ausgegeben werden, die mit Sensoren gekoppelt ist und auf diese Weise die Vorbereitungshandlung erfasst. Das Aktivierungssignal kann dann so erzeugt werden, dass es beispielsweise Informationen über die konkrete erfasste Vorbereitungshandlung umfasst, etwa um in Abhängigkeit davon die Aktivierungsanimation anzupassen.

Das Aktivierungssignal kann als erster Trigger verstanden werden. Die Erfassung der Vorbereitungshandlung und das Empfangen des Aktivierungssignals können auf verschiedene, an sich bekannte Arten erfolgen. Beispielsweise kann eine Bedienhandlung eines Nutzers erfasst werden oder es kann ein bestimmter Zustand des Fahrzeugs oder einer seiner Einrichtungen erfasst werden. Ferner können Sensoren des Fahrzeugs verwendet werden, etwa eine Sitzmatte, Sensoren über den Zustand von Türen des Fahrzeugs, Annäherungssensoren und/oder eine Schließanlage des Fahrzeugs.

Alternativ oder zusätzlich können externe Einheit verwendet werden, um die Vorbereitungshandlung zu erfassen und/oder das Aktivierungssignal zu empfangen. Das Aktivierungssignal kann dabei von der externen Einheit oder von einer internen Einheit des Fahrzeugs in Abhängigkeit von einem Zustand der externen Einheit erzeugt werden. Ferner kann eine datentechnische Verbindung zwischen einer externen und einer internen Einheit hergestellt und erfasst werden, etwa bei einem Aufbau einer Verbindung von dem Fahrzeug zu einem berührungslosen Schlüssel, einem mobilen Nutzergerät, einem externen Server oder einer anderen Kommunikationseinheit.

Bei dem Verfahren ist zumindest eine Anzeigefläche vorgesehen. Diese kann fest verbaut oder bewegbar sein, beispielsweise schwenkbar. In einer Ausgestaltung der Erfindung können ferner eine oder mehrere weitere Anzeigeflächen vorgesehen sein, die insbesondere beabstandet voneinander angeordnet sind. In diesem Fall können die Positionen der Anzeigeflächen, insbesondere relativ zueinander, bei der Aktivierungsanimation berücksichtigt werden.

Gemäß einer weiteren Ausbildung wird das erste Grafikobjekt der ersten Darstellung durch eine erste Anzeigefläche angezeigt. Dadurch wird vorteilhafterweise eine erste Ausgabe von Daten mittels der ersten Anzeigefläche ermöglicht, insbesondere noch bevor anhand eines Übergangssignals der Übergang zur zweiten Darstellung vollzogen worden ist. Insbesondere ist dabei vorgesehen, dass bei der ersten Anzeige keine weiteren Anzeigeflächen zur Ausgabe genutzt werden.

Gemäß einer Weiterbildung wird die zweite Darstellung durch die erste und eine weitere Anzeigefläche angezeigt. Dadurch können vorteilhafterweise anhand der zweiten Darstellung Daten sowohl mittels der ersten, als auch der weiteren Anzeigefläche Daten ausgegeben werden. Dadurch kann beispielsweise eine größere Fläche genutzt werden, um eine größere Informationsmenge strukturiert und übersichtlich auszugeben. Ferner kann ein integriertes Darstellungskonzept verwendet werden, in dem die Anzeigeflächen verschiedene ergänzende Informationen ausgeben.

Das Erscheinen der zweiten Darstellung kann insbesondere einen Bewegungseffekt umfassen. Dieser Bewegungseffekt kann auf unterschiedliche Weisen gebildet werden. Insbesondere ist dabei ein grafischer Effekt vorgesehen, der eine Ortsänderung in Abhängigkeit von der Zeit umfasst. Beispielsweise kann eine Ortsänderung in eine bestimmte Richtung über die Fläche der Anzeigefläche ausgegeben werden.

Bei einer Darstellung mittels mehrerer Anzeigeflächen im Fahrzeug kann der Bewegungseffekt insbesondere so gebildet sein, dass die Geometrie der Anordnung der Anzeigeflächen berücksichtigt wird. Dabei wird insbesondere eine Bewegung von der ersten zu einer weiteren Anzeigefläche dargestellt, wobei zusätzlich dazu auch eine Bewegung in eine andere Richtung dargestellt werden kann, etwa von der weiteren Anzeigefläche weg.

Beispielsweise kann eine Ausbreitung eines Impulses dargestellt werden, indem eine räumliche Fortpflanzung einer bestimmten grafische Eigenschaft der Darstellung über die Fläche der Anzeigefläche dargestellt wird. Dabei kann die grafische Eigenschaft der Darstellung verschiedene Parameter der grafischen Darstellung betreffen. Alternativ oder zusätzlich kann der Bewegungseffekt eine Verschiebung und/oder eine Drehung umfassen. Ferner kann vorgesehen sein, dass ein Ausbreiten dargestellt wird, wobei eine zunehmende Erstreckung einer Darstellung und/oder einer Eigenschaft der Darstellung über eine bestimmten Flächenbereich erzeugt wird.

Gemäß einer weiteren Ausbildung wird bei dem Bewegungseffekt eine Bewegung eines Bereichs erhöhter Helligkeit dargestellt. Dadurch kann der Bewegungseffekt vorteilhafterweise besonders leicht erfassbar dargestellt werden. Beispielweise kann auf diese Weise eine Ausbreitung eines Lichtimpulses dargestellt werden. Ferner kann analog dazu eine Bewegung eines Bereichs mit gegenüber der Umgebung erniedrigter Helligkeit ausgegeben werden oder es kann eine Bewegung eines hinsichtlich einer anderen Eigenschaft kontrastierenden Bereichs dargestellt werden.

Die erste und zweite Darstellung können dynamisch angezeigt werden. Beispielsweise kann eine zeitabhängige Änderung einer Eigenschaft der Darstellung ausgegeben werden, etwa eine Bewegung eines Elements der auf der Anzeigefläche ausgegebenen Darstellung und/oder ein sich verändernder Parameter der Darstellung, etwa eine Helligkeit, Intensität, Farbe oder ein Kontrast.

Gemäß einer Ausbildung wird ferner ein Übergangssignal empfangen und das Verschwinden der ersten Darstellung und das Erscheinen der zweiten Darstellung werden nach dem Empfang des Übergangssignals ausgegeben. Das Übergangssignal kann insbesondere als zweiter Trigger verstanden werden. Es kann beispielsweise dann empfangen werden, wenn eine weitere Vorbereitungshandlung zur Inbetriebnahme des Fahrzeugs erfasst wird, die zeitlich auf die Vorbereitungshandlung zum Empfang des Aktivierungssignals folgt. Die Aktivierungsanimation kann somit vorteilhafterweise schrittweise dargestellt und mit mehreren Vorbereitungshandlungen zur Inbetriebnahme synchronisiert werden.

Der Empfang des Übergangssignals erfolgt dabei analog zum Empfang des Aktivierungssignals auf an sich bekannte Art, wobei insbesondere verschiedene Einrichtungen und/oder Sensoren des Fahrzeugs genutzt werden können. Beispielsweise kann das Übergangssignal empfangen werden, wenn ein Annäherungsvorgang, ein Entriegelungsvorgang, ein Türöffnen, ein Einsteigen oder Setzen des Nutzers oder ein Starten des Fahrzeugs erfasst wird. Typischerweise sind mehrere solcher Vorbereitungshandlungen notwendig, um das Fahrzeug in Betrieb zu nehmen und insbesondere eine Fahrt zu beginnen.

Das Aktivierungssignal wird dabei zeitlich vor dem Übergangssignal empfangen, wobei insbesondere vorgesehen sein kann, dass das Übergangssignal erst im Anschluss an das volle Erscheinen der ersten Darstellung empfangen wird. Ferner kann die Wirkung des Übergangssignals auf die Darstellung nach dem Erscheinen der ersten Darstellung sichtbar werden. Insbesondere ist dabei eine bestimmte Zeitspanne zwischen den beiden Signalen vorgesehen. Zum Erzeugen der Aktivierungsanimation genügt es dabei insbesondere, dass das Aktivierungssignal empfangen wurde, während das Übergangssignal auch während der Ausgabe der Aktivierungsanimation empfangen werden kann. Beispielsweise können mehrere Abschnitte der Aktivierungsanimation in Koordination mit dem Empfang des Übergabesignals koordiniert ausgegeben werden.

Die Bildung der Aktivierungsanimation in Abhängigkeit von dem Aktivierungssignal und dem Übergangssignal kann auf verschiedene Weise erfolgen. Beispielsweise können die Signale verschiedene Ausprägungen aufweisen und die Grafikdaten können in Abhängigkeit von diesen Ausprägungen erzeugt werden. Zudem kann vorgesehen sein, dass die jeweiligen Zeitpunkte des Empfangs der beiden Signale berücksichtigt werden.

Gemäß einer Weiterbildung umfasst das Erscheinen der ersten und/oder zweiten Darstellung ein Einblenden. Dadurch kann vorteilhafterweise ein fließender Übergang zwischen verschiedenen Darstellungen erzeugt werden, während das Erfassen der ausgegebenen Daten möglicherweise durch harte Übergänge erschwert würde. Der Nutzer kann auf diese Weise eine Darstellung leicht erfassen, ohne sich nach dem Übergang von der ersten zur zweiten Darstellung völlig neu orientieren zu müssen.

Unter einem "Einblenden" wird dabei insbesondere verstanden, dass für ein Objekt einer Darstellung ein Übergang von einer dunkleren zu einer helleren Anzeige erzeugt wird. In analoger Weise können weitere grafische Effekte genutzt werden, etwa eine Veränderung der Transparenz, des Kontrastes, der Farbgebung oder weiterer Eigenschaften. Insbesondere kann ein Auftauchen des Objekts gegenüber einem Hintergrund dargestellt werden.

Analog dazu kann vorgesehen sein, dass das Verschwinden der ersten und/oder zweiten Darstellung ein Ausblenden umfasst. Dieses kann insbesondere im Vergleich mit dem Einblenden als umgekehrter graphischer Effekt verstanden werden, etwa durch einen Übergang von einer hellen zu einer dunklen Darstellung oder durch die Veränderung weiterer grafischer Eigenschaften der Darstellung oder dargestellter Objekte.

Das Erscheinen und Verschwinden der ersten und/oder zweiten Darstellung kann dabei für die jeweilige Darstellung als Ganzes oder in analoger Weise für einzelne Elemente der Darstellung erzeugt werden. Beispielsweise können bei einem Verschwinden einer Darstellung einzelne dargestellte Elemente der Darstellung nacheinander ausgeblendet werden. Ferner können verschiedene grafische Effekte auf verschiedene Elemente angewandt werden, etwa ein Übergang von hell nach dunkel für das eine und ein Übergang von geringer zu starker Transparenz für das andere Element der Darstellung.

Alternativ oder zusätzlich können weitere Darstellungsformen zum Erzeugen eines Erscheinens und/oder Verschwindens der Darstellungen verwendet werden, etwa eine Bewegung von Elementen des jeweiligen Darstellung, etwa im Sinne eines "Wegfliegens" oder "Einfliegens" von Elementen der Darstellung, wobei eine Bewegung der Elemente von einem Bereich außerhalb der anzeigbaren Darstellung her dargestellt wird.

Das erste Grafikobjekt wird auf an sich bekannte Weise gebildet und kann insbesondere eine Marke umfassen, insbesondere ein Logo oder Zeichen eines Unternehmens. Dadurch kann vorteilhafterweise eine besonders gute Wiedererkennbarkeit und Integration in ein weiteres Ausbildungskonzept erreicht werden. Dabei kann insbesondere eine Marke eines Hersteller des Fahrzeugs oder des Fahrzeuginformationssystems dargestellt werden. Ferner kann die Marke dynamisch dargestellt werden, etwa mittels einer Bewegung von Elementen der Darstellung.

Zudem kann vorgesehen sein, dass die erste Darstellung einstellbar ist. Beispielsweise kann sie von dem Nutzer konfiguriert werden und/oder es kann eine personalisierte Darstellung für den Nutzer erzeugt und ausgegeben werden.

Gemäß einer weiteren Ausbildung wird zum Erzeugen der Grafikdaten der ersten Darstellung eine Animationssequenz von einem nichtflüchtigen Speichermedium abgerufen. Dadurch kann vorteilhafterweise eine besonders schnelle und einfach zu verarbeitende Anzeige der ersten Darstellung erfolgen.

Insbesondere ist dabei vorgesehen, dass eine vorgegebene Anzeige als erste Anzeige ausgegeben wird, wobei beispielsweise ein Hochfahren komplexerer Systeme, beispielsweise eines aufwendigeren Rechnersystems, nicht notwendig ist. Zudem kann das Erscheinen der ersten Darstellung und insbesondere auch ein erster Abschnitt der Aktivierungsanimation fest vorgegeben sein.

Gemäß einer Ausgestaltung des erfindungsgemäßen Verfahrens umfasst die zweite Darstellung ein erstes und ein zweites Anzeigeobjekt. Dabei weisen die Anzeigeobjekte insbesondere Skalen und Zeigerelemente auf. Dies erlaubt es vorteilhafterweise, mittels der Anzeigeobjekte der zweiten Darstellung Werte von Parametern, etwa Betriebsparametern des Fahrzeugs, anzuzeigen.

Dabei sind Anzeigeobjekte grafische Objekte, durch die eine Anzeige eines Wertes eines Parameters ausgegeben werden kann. Beispielsweise können dazu Rundinstrumente, beziehungsweise Darstellungen nach Art analoger Rundinstrumente, verwendet werden, die auch als "Tuben" bezeichnet werden können. Anhand solcher Tuben werden typischerweise Parameter wie die Geschwindigkeit, Drehzahl oder eine Betriebsart eines Fahrzeugs angezeigt.

Gemäß einer weiteren Ausgestaltung weisen die Skalen der Anzeigeobjekte Skalenelemente auf, wobei während des Erscheinens der zweiten Darstellung eine Bewegung der Skalenelemente zu Zielpositionen entlang der Skalen der Anzeigeobjekte dargestellt wird. Damit wird vorteilhafterweise ein besonders einfach erfassbares Erscheinen der Skalen ausgegeben. Die Skalenelemente können etwa Skalenstriche oder Abschnitte, etwa Segmente, einer Skala sein. Beispielsweise kann ein Zusammensetzen der Skalen aus den Skalenelementen dargestellt werden, sodass der Nutzer über einen bestimmten Zeitraum hinweg verfolgen kann, wie sich die Skalen aufbauen.

Ferner kann vorgesehen sein, dass die Zeigerelemente der Anzeigeobjekte zeitlich versetzt nach dem Beginn des Erscheinens der Anzeigeobjekte erscheinen. Zudem können die Zeigerelemente anhand eines Lichteffekt dargestellt werden, etwa nach Art eines Laserstrahls, der durch seinen Verlauf eine Zeigerelement darstellt.

Gemäß einer Weiterbildung sind das erste und zweite Anzeigeelement voneinander beabstandet angeordnet, wobei ein Zwischenraum gebildet wird und zeitlich versetzt nach dem Beginn des Erscheinens der Anzeigeobjekte in dem Zwischenraum eine Hintergrunddarstellung angezeigt wird. Dadurch kann vorteilhafterweise eine Strukturierung der Darstellung so erreicht werden, dass die durch die Anzeigeelemente ausgegebenen Informationen von den Informationen der Hintergrunddarstellung getrennt erfasst werden können.

Gemäß einer Ausbildung ist das erste und/oder zweite Anzeigeobjekt als Rundinstrument ausgebildet. Diese erlauben es vorteilhafterweise, wichtige Parametern in einem Fahrzeug, etwa Geschwindigkeit und Umdrehungszahl, auf eine Weise auszugeben, die dem Nutzer typischerweise vertraut ist.

Gemäß einer weiteren Ausbildung werden ferner Betriebsdaten eines Fahrzeugs erfasst und die zweite Darstellung wird in Abhängigkeit von den erfassten Betriebsdaten erzeugt. Dies erlaubt vorteilhafterweise eine Nutzung der Darstellung zur Ausgabe relevanter Betriebsdaten für den Nutzer.

Die Anzeige der Betriebsdaten kann dabei auf an sich bekannte Weise erfolgen, beispielsweise mittels der Tuben und/oder anderer grafischer Elemente zur Datenausgabe. Es können etwa ein Ladungs- und/oder Füllzustand eines Energiespeichers, eine Umgebungs- und/oder Innentemperatur angezeigt werden. Ferner können Informationen betreffend eines Rechnersystems angezeigt werden, beispielsweise über verfügbare und/oder aktuell laufende Anwendungsprogramme, etwa eines Medienabspielprogramms. Insbesondere können dabei auch Betriebsdaten weiterer Einrichtungen berücksichtigt werden, die mit dem Fahrzeug in datentechnischer Verbindung stehen, beispielsweise eines mobilen Nutzergeräts wie eines Mobiltelefons oder eines mobilen Computers.

Gemäß einer Weiterbildung ist die Anzeigefläche von einem Kombiinstrument eines Fahrzeugs umfasst. Ferner kann eine weitere Anzeigefläche von einem Mitteldisplay des Fahrzeugs umfasst sein. Dadurch werden vorteilhafterweise Displays genutzt, die typischerweise in Fahrzeugen vorgesehen sind und durch die insbesondere dem Daten leicht erfassbar ausgegeben werden können. Insbesondere kann dabei vorgesehen sein, dass die erste Darstellung durch das Kombiinstrument ausgegeben wird, während bei dem Übergang zu der zweiten Darstellung ein Ausbreiten der Anzeige auf das Mitteldisplay angezeigt wird.

Zudem kann vorgesehen sein, dass eine oder mehrere der Anzeigeflächen von einer mobilen Einheit umfasst sind, beispielsweise von einem Mobiltelefon oder einem mobilen Rechner des Nutzers. Auch hier kann die Aktivierungsanimation in analoger Weise ausgegeben werden.

Gemäß einer Ausbildung wird während des Anzeigens der Aktivierungsanimation ein Startvorgang eines Rechners durchgeführt, wobei die Aktivierungsanimation in Abhängigkeit von einem zeitlichen Ablauf des Startvorgangs erzeugt und angezeigt wird. Insbesondere kann dadurch die Aktivierungsanimation so erzeugt werden, dass die Ausgabe der zweiten Darstellung bei Abschluss des Startvorgangs abgeschlossen ist. Die Aktivierungsanimation kann dadurch vorteilhafterweise als eine Warteanimation verwendet werden, um dem Nutzer das Warten bis zur vollständigen Einsatzbereitschaft des Rechners besser zu vermitteln.

Insbesondere kann so erreicht werden, dass der Startvorgang, etwas das Hochfahren des Rechners, nicht nur als störende Verzögerung im Ablauf empfunden wird, sondern dass der Nutzer erkennt, dass das System bereits aktiv ist und der vollständig hochgefahrene Zustand hergestellt wird. Die Zeitdauer zwischen dem Starten des Systems und dem Erreichen eines vollständig einsatzbereiten Zustands kann dabei von verschiedenen Umständen abhängen, insbesondere von zum Laden von Betriebsdaten sowie zum automatischen Testen von Systemkomponenten benötigten Zeit. Während dieser Dauer wird typischerweise ein leerer Bildschirm oder eine Darstellung ausgegeben, etwa eine Darstellung einer Sanduhr, sodass der Nutzer nicht erkennen kann, wie weit der Startvorgang fortgeschritten ist. Indem die Aktivierungsanimation in Abhängigkeit von einem zeitlichen Ablauf des Startvorgangs erzeugt wird, kann die Wartezeit dem Nutzer dagegen besser verständlich gemacht werden.

Dabei kann während des Hochfahrens der zeitliche Ablauf bestimmt werden, etwa anhand des Abschließens bestimmter Abschnitte des Hochfahrvorgangs. Zum Beispiel kann durch den Rechner ein erstes und/oder zweites Signal erzeugt werden, anhand dessen wiederum die Aktivierungsanimation erzeugt wird. Ein solches Signal des Rechners kann beispielsweise beim oder nach dem Start eines bestimmten Programms oder nach dem Ausführen eines bestimmten Programms während des Hochfahrvorgangs des Rechners erzeugt werden. Beispielsweise kann vorgesehen sein, dass nach dem Empfangen des Aktivierungssignals neben dem Erscheinen der ersten Darstellung auch das Hochfahren des Rechners ausgelöst wird. Alternativ oder zusätzlich kann das Übergangssignal nach Bereitstellung einer bestimmten grundlegenden Bedienbarkeit des Rechners erzeugt werden. Ferner kann vorgesehen sein, dass nach dem Empfangen des Übergangssignals das Verschwinden der ersten und das Erscheinen der zweiten Darstellung ferner in Abhängigkeit vom Fortschritt des Hochfahrvorgangs gebildet wird. Zudem können weitere Signale durch den Rechner in Abhängigkeit vom Ablauf des Hochfahrvorgangs erzeugt und insbesondere verwendet werden, um einen Zusammenhang zwischen dem Hochfahren und dem Aktivierungs- beziehungsweise Übergangssignal auszugeben.

Ferner kann eine bestimmte Zeitdauer für das Hochfahren vorgesehen sein, sodass der zeitliche Ablauf der Aktivierungsanimation anhand eines fest vorgegebenen zeitlichen Ablaufs erzeugt werden kann.

Gemäß einer weiteren Ausbildung umfasst die zweite Darstellung zumindest ein Anzeigeobjekt und einen Anwendungsbereich, wobei der Anwendungsbereich Anwendungsflächen umfasst. Damit können vorteilhafterweise klar abgegrenzte Bereiche gebildet werden, in denen eine Ausgabe bestimmter Daten erfolgen kann.

Dabei kann das zumindest ein Anzeigeobjekt nach der oben beschriebenen Art eines Rundinstruments gebildet sein. Als Anwendungsbereich kann eine Fläche der Darstellung vorgesehen sein, durch die weitere Daten ausgegeben werden können, beispielsweise für eine Anzeige und Bedienung von Anwendungsprogrammen, wobei die Anwendungsprogramme sowohl durch einen Rechner des Fahrzeugs als auch durch den Rechner eines Mobilgeräts ausgeführt werden können.

Beispielsweise kann der Anwendungsbereich als Hintergrunddarstellung ausgebildet sein. Insbesondere kann ein von zwei Anzeigeobjekten, die im Vordergrund dargestellt werden, gebildeter Zwischenraum, etwa zwischen zwei Rundinstrumenten, für die Anzeige der Hintergrunddarstellung genutzt werden. Dadurch kann etwa auf einer Anzeigefläche eines Kombiinstruments ein von zwei dargestellten Rundinstrumenten eingeschlossener Zwischenraum als Anwendungsfläche genutzt werden; ferner kann die Anwendungsfläche auch zumindest teilweise innerhalb der Rundinstrumente angeordnet sein. Zudem kann der Anwendungsbereich auf der zweiten Anzeigefläche, insbesondere einem Mitteldisplay, ausgebildet sein.

Die Darstellung der Daten der Anwendungsprogramme erfolgt anhand von Anwendungsflächen, wobei ein bestimmter Bereich der Fläche des Anwendungsbereichs den Daten eines bestimmten Anwendungsprogramms zugeordnet ist. Insbesondere ist der einem Anwendungsprogramm zugeordnete Bereich der Fläche als Anwendungsfläche ausgebildet, insbesondere als Kachel, Widget oder Fenster.

Gemäß einer Weiterbildung werden die Anwendungsflächen der zweiten Darstellung Anwendungen zugeordnet und nach dem Erscheinen der zweiten Darstellung in den Anzeigeflächen Ausgabedaten der Anwendungen angezeigt werden. Dadurch werden vorteilhafterweise Ausgabedaten von Anwendungen, das heißt Anwendungsprogrammen, mittels der zweiten Darstellung ausgegeben.

Insbesondere kann vorgesehen sein, dass die zweite Darstellung in zwei Stufen erscheint: In einer ersten Stufe können die Anwendungsflächen dargestellt werden, wobei insbesondere vorgesehen ist, dass in der ersten Stufe noch keine spezifischen Inhalte der den Anwendungsflächen zugeordneten Anwendungsprogramme ausgegeben werden. Beispielsweise kann eine Struktur der Flächenaufteilung nach Art eines Gerüsts angezeigt werden. Beispielsweise erfolgt die Darstellung in dieser ersten Stufe so, dass die Abmessungen der Anwendungsflächen erfassbar sind, etwa anhand von Umrandungen der jeweiligen Anwendungsflächen. In einer zweiten Stufe folgt dann die Anzeige von Ausgabedaten der jeweils zugeordneten Anwendungsprogramme innerhalb der Anwendungsflächen.

Zum Beispiel kann in der ersten Stufe eine Darstellung einer Kachelstruktur oder Schablone erfolgen, durch welche die Umrisse der Anwendungsflächen erkennbar sind. Dabei kann vorgesehen sein, dass bereits eine Beziehung zu den jeweils zugeordneten Anwendungsprogrammen hergestellt wird, beispielsweise mittels einer fest vorgegebenen Darstellung. Ferner kann in der ersten Stufe eine dynamische Darstellung erfolgen, etwa mittels einer Bewegung oder eines dargestellten Lichteffekts der Anwendungsflächen. Beispielsweise kann eine Bewegung einer dargestellten Hervorhebung ausgegeben werden.

In der zweiten Stufe kann dann ein Füllen der Anwendungsflächen mit Ausgabedaten der Anwendungsprogramme erfolgen, beispielsweise indem eine dynamisch von einem Anwendungsprogramm erzeugte Darstellung im Bereich der zugeordneten Anwendungsfläche ausgegeben wird. Auch hier kann vorgesehen sein, dass ferner eine Bewegung oder ein dargestellter Lichteffekt ausgegeben wird.

Das erfindungsgemäße Fahrzeuginformationssystem umfasst eine Signalerzeugungseinheit, durch die eine Vorbereitungshandlung eines Nutzers zur Inbetriebnahme des Fahrzeugs erfassbar ist und in Abhängigkeit von der erfassten Vorbereitungshandlungen ein Aktivierungssignal erzeugbar ist. Es umfasst ferner eine Empfangseinheit, durch die ein Aktivierungssignal empfangbar ist, und eine Grafikeinheit, durch die in Abhängigkeit von dem Aktivierungssignal Grafikdaten einer Aktivierungsanimation mit einer ersten und einer zweiten Darstellung erzeugbar sind. Es umfasst ferner eine Anzeigefläche, durch welche die Grafikdaten anzeigbar sind, wobei nach dem Empfangen des Aktivierungssignals ein Erscheinen der ersten Darstellung ausgebbar ist, wobei die erste Darstellung ein erstes Grafikobjekt umfasst. Anschließend ist ein Verschwinden der ersten Darstellung und ein Erscheinen der zweiten Darstellung ausgebbar.

Das erfindungsgemäße Fahrzeuginformationssystem ist insbesondere ausgebildet, das vorstehend beschriebene erfindungsgemäße Verfahren zu implementieren. Das Fahrzeuginformationssystem weist somit dieselben Vorteile auf wie das erfindungsgemäße Verfahren.

Die erfasste Vorbereitungshandlung kann beispielsweise einen Annäherungsvorgang, einen Entriegelungsvorgang, ein Türöffnen, ein Einsteigen oder Setzen eines Nutzers oder ein Starten des Fahrzeugs umfassen.

Die Erfassung des Aktivierungssignals und des Übergangssignals erfolgt dabei auf an sich bekannte Weise, wobei insbesondere eine Schnittstelle zu einer Einrichtung des Fahrzeugs vorgesehen ist, durch die ein erfasstes Signal an das Fahrzeuginformationssystem übertragen werden kann.

Bei einer Ausbildung ist ferner eine weitere Anzeigefläche vorgesehen, die beabstandet von der Anzeigefläche angeordnet ist. Dies erlaubt vorteilhafterweise eine Vergrößerung der Fläche zur Ausgabe der Darstellungen und eine Strukturierung ausgegebener Informationen durch geeignete Wahl der Anzeigefläche.

Dabei kann insbesondere vorgesehen sein, dass das erste Grafikobjekt der ersten Darstellung durch eine erste Anzeigefläche anzeigbar ist. Ferner kann die zweite Darstellung so gebildet sein, dass die zweite Darstellung durch die erste und eine zweite Anzeigefläche anzeigbar ist. Dies erlaubt eine weiter verbesserte Strukturierung der ausgegebenen Daten.

Bei einer weiteren Ausbildung der Erfindung ist vorgesehen, dass die zweite Darstellung ein erstes und ein zweites Anzeigeobjekt umfasst. Insbesondere weisen die Anzeigeobjekte Skalen und Zeigerelemente auf. Dadurch können nach dem Wechsel zu der zweiten Darstellung vorteilhafterweise zumindest zwei Werte besonders relevanter Parameter ausgegeben werden.

Die Erfindung wird nun anhand von Ausführungsbeispielen mit Bezug zu den Zeichnungen erläutert.
- Figur 1: zeigt ein Fahrzeug mit einem Ausführungsbeispiel des erfindungsgemäßen Fahrzeuginformationssystems,
- Figuren 2A bis 2F: zeigen ein Ausführungsbeispiel einer durch das erfindungsgemäße Verfahren erzeugten Anzeige auf einer Anzeigefläche und
- Figuren 3A bis 3G: zeigen ein Ausführungsbeispiel einer durch das erfindungsgemäße Verfahren erzeugten Anzeige auf zwei Anzeigeflächen.

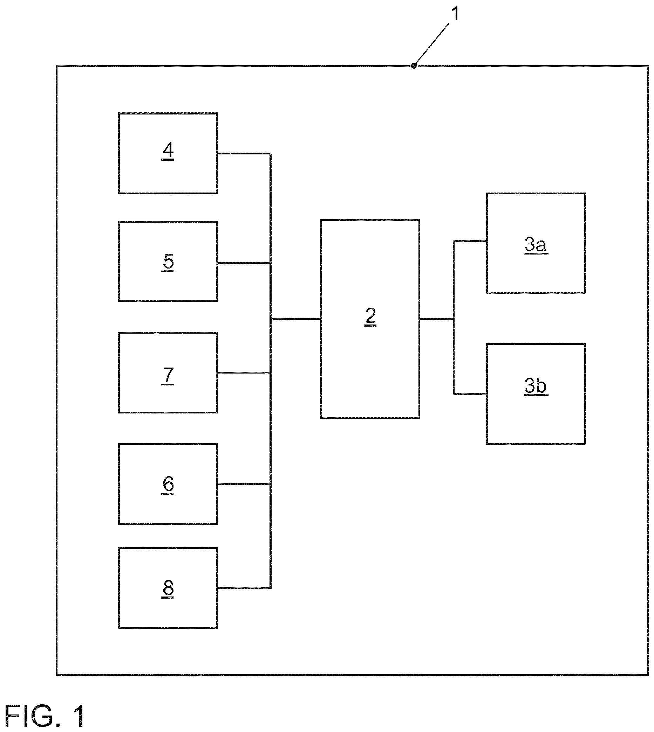

Mit Bezug zu Figur 1 wird ein Fahrzeug mit einem Ausführungsbeispiel des erfindungsgemäßen Fahrzeuginformationssystems erläutert.

Ein Fahrzeug 1 umfasst eine erste Anzeigefläche 3a und eine zweite Anzeigefläche 3b. In dem Ausführungsbeispiel ist die erste Anzeigefläche 3a von dem Kombiinstrument des Fahrzeugs 1 umfasst, während die zweite Anzeigefläche 3b von einem Mitteldisplay des Fahrzeugs 1 umfasst ist. Die Anzeigeflächen 3a, 3b sind mit einer Steuereinheit 2 gekoppelt. Mit der Steuereinheit 3 sind ferner eine Empfangseinheit 4, eine Grafikeinheit 5, ein Rechner 6 und ein nichtflüchtiges Speichermedium 7 sowie eine Signalerzeugungseinheit 8 gekoppelt.

Mit Bezug zu Figur 1 wird ein Ausführungsbeispiel des erfindungsgemäßen Verfahrens erläutert. Dabei wird von dem oben beschriebenen erfindungsgemäßen Fahrzeuginformationssystem ausgegangen.

In einem ersten Schritt wird durch die Signalerzeugungseinheit 8 eine Vorbereitungshandlung eines Nutzers zur Inbetriebnahme des Fahrzeugs 1 erfasst. Dies erfolgt bei dem Ausführungsbeispiel mittels Sensoren des Fahrzeugs 1, durch die etwa ein Entriegeln des Fahrzeugs 1 detektiert wird. In weiteren Ausführungsbeispielen werden andere Ereignisse und Zustände erfasst, beispielsweise ein Öffnen einer Tür des Fahrzeugs 1, eine Annäherung eines Fahrers an das Fahrzeug 1, ein Einsteigen oder Setzen eines Nutzers oder ein Starten des Fahrzeugs 1. Zudem können alternativ oder zusätzlich andere Ereignisse erfasst werden.

Anhand der erfassten Vorbereitungshandlung erzeugt die Signalerzeugungseinheit 8 ein Aktivierungssignal und gibt dieses anschließend an die Empfangseinheit 4 aus, die das Aktivierungssignal empfängt.

Bei dem Ausführungsbeispiel ist vorgesehen, dass anhand des Aktivierungssignals auch ein Startvorgang des Rechners 6 initiiert wird, insbesondere ein Hochfahren des Rechners 6. Dabei wird laufend erfasst, wie weit das Hochfahren abgeschlossen ist und wie lange der Startvorgang noch dauern wird. Im Verlauf der Hochfahrens werden Ausgabedaten von Anwendungsprogrammen des Rechners 6 geladen und/oder neu erzeugt, die anschließend angezeigt werden können.

In Abhängigkeit von dem Aktivierungssignal erzeugt die Grafikeinheit 5 Grafikdaten einer ersten Darstellung, die anschließend durch die Anzeigeflächen 3a, 3b ausgegeben wird. Dabei ist in dem Ausführungsbeispiel vorgesehen, dass die erste Darstellung lediglich zu einer Anzeige auf der ersten Anzeigefläche 3a führt, während die zweite Anzeigefläche 3b dunkel bleibt. Die erste Anzeige ist unten im Detail erläutert.

In einem weiteren Schritt wird durch die Empfangseinheit 4 ein Übergangssignal empfangen. Auch das Übergangssignal kann, analog zu den obigen Erläuterungen betreffend das Aktivierungssignal, auf verschiedene Weisen empfangen werden. Beispielsweise kann das Übergangssignal erzeugt werden, wenn ein Schließen einer Fahrertür des Fahrzeugs 1 oder ein Setzen auf einen Fahrersitz detektiert wird. Zudem kann das Übergangssignal alternativ oder zusätzlich anhand anderer Ereignisse erzeugt werden. Zudem kann das Übergangssignal automatisch erzeugt werden, etwa nach Ablauf einer bestimmten Zeitspanne oder in Abhängigkeit von dem Fortschritt des Startvorgangs des Rechners 6.

In Abhängigkeit von dem Übergangssignal erzeugt die Grafikeinheit 5 Grafikdaten einer zweiten Darstellung, die anschließend durch die Anzeigeflächen 3a, 3b ausgegeben wird. Dabei ist in dem Ausführungsbeispiel vorgesehen, dass die zweite Darstellung verteilt auf die erste 3a und zweite Anzeigefläche 3b erfolgt. In dem Ausführungsbeispiel werden Betriebsdaten des Fahrzeugs 1 erfasst und die zweite Darstellung wird in Abhängigkeit von den erfassten Betriebsdaten erzeugt. Die Betriebsdaten können dabei in einem weiten Sinne alle Informationen über den Betrieb des Fahrzeugs 1 betreffen, beispielsweise Daten über die Bewegung des Fahrzeugs 1 oder über Anwendungsprogramme, die durch den Rechner 6 ausgeführt werden. Auch die zweite Anzeige ist unten im Detail erläutert.

Das Erscheinen der ersten und/oder zweiten Darstellung erfolgt durch ein Einblenden, wobei beginnend mit einem dunklen Bildschirm der ersten Anzeigefläche 3a die jeweilige Darstellung durch kontinuierliche Erhöhung der Helligkeit erscheint. Dies wird mittels einer entsprechenden Animationssequenz dargestellt. Dabei werden alternativ oder zusätzlich andere an sich bekannte Verfahren genutzt, um den Ablauf des Erscheinens der Darstellungen anzuzeigen, etwa durch ein separates Erscheinen von Elementen, aus denen die Darstellungen sich dann zusammenzusetzen scheinen.

In dem Ausführungsbeispiel ist vorgesehen, dass zum Erzeugen der Grafikdaten der ersten Darstellung eine Animationssequenz von dem nichtflüchtigen Speichermedium 7 abgerufen wird. Das heißt, die Animationssequenz, die beim Erscheinen der ersten Darstellung ausgegeben wird, muss nicht bei jedem Ausführen des Verfahrens neu erzeugt werden, sondern sie liegt bereits vor und muss nur noch in geeigneter Form geladen und abgespielt werden.

Nach dem Empfang des Übergangssignals verschwindet die erste Darstellung und die zweite Darstellung erscheint. Dabei wird zudem ein Übergang dargestellt, der wiederum eine Animationssequenz umfasst, an deren Ende die Anzeige der vollständigen zweiten Darstellung steht. Insbesondere wird der Übergang so gebildet, dass er sich im Wesentlichen über die Zeit des Hochfahrens des Rechners 6 erstreckt.

Auch hier kann wenigstens teilweise ein Abruf einer Animationssequenz von dem nichtflüchtigen Speichermedium 7 erfolgen, wobei damit insbesondere die erforderliche Rechenkapazität verringert werden kann.

In weiteren Ausführungsbeispielen kann vorgesehen sein, dass verschiedene Ausprägungen des Aktivierungssignals und/oder Übergangssignals empfangen werden können, beispielsweise können verschiedene Ereignisse zur Erzeugung der Signale führen oder es kann ein bestimmter Fahrer detektiert werden. Dabei kann ferner vorgesehen sein, dass sich die Erzeugung der ersten und/oder zweiten Darstellung und/oder des Übergangs unterscheidet und beispielsweise eine personalisierte und auf den Fahrer abgestimmte Ausgabe erzeugt wird.

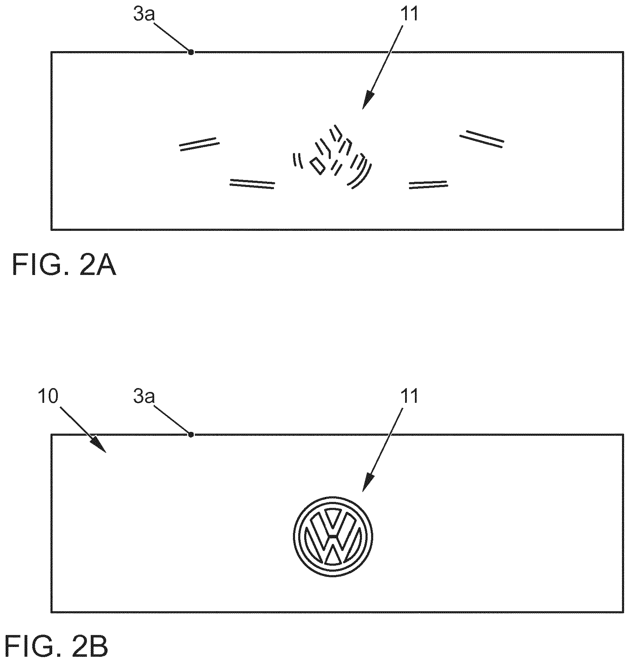

Mit Bezug zu den Figuren 2A bis 2F wird ein Ausführungsbeispiel einer durch das erfindungsgemäße Verfahren erzeugten Anzeige auf einer Anzeigefläche erläutert. Dabei wird von dem oben beschriebenen erfindungsgemäßen Fahrzeuginformationssystem und dem erfindungsgemäßen Verfahren zu seinem Betrieb ausgegangen.

Nach dem Empfangen des Aktivierungssignals werden durch die Grafikeinheit 5 Grafikdaten der ersten Darstellung 10 erzeugt und ausgegeben. Bei dem dargestellten Ausführungsbeispiel ist vorgesehen, dass bei der ersten Darstellung 10 lediglich eine Anzeige auf der ersten Anzeigefläche 3a erfolgt, während die zweite Anzeigefläche 3b leer bleibt.

Die Figuren 2A und 2B zeigen das Erscheinen der ersten Darstellung 10, wobei ein Einblenden eines ersten Grafikobjekts 11 in Figur 2A mittels gestrichelter Linien angedeutet ist. Das erste Grafikelement 11 ist in dem Ausführungsbeispiel ein Logo eines Fahrzeugherstellers. Alternativ oder zusätzlich können andere Grafikobjekte umfasst sein, etwa ein Profilbild eines Nutzers oder ein anderes Element.

Das Erscheinen des ersten Grafikobjekts 11 wird durch kontinuierliches Ansteigen seiner Helligkeit dargestellt, wobei von einem dunklen Bildschirm der Anzeigefläche 3a ausgegangen wird. Zusätzlich dazu ist in dem Ausführungsbeispiel vorgesehen, dass weitere Lichteffekte im Bereich der Anzeigefläche 3a ausgegeben werden, etwa ein Lichtschimmer, der sich über die Anzeigefläche 3a bewegt. Bei dem in Figur 2B gezeigten Fall ist die erste Darstellung 10 schließlich vollständig auf der ersten Anzeigefläche 3a erschienen.

In weiteren Ausführungsbeispielen kann ein animiertes erstes Grafikobjekt 11 vorgesehen sein, das sich beispielsweise fortwährend bewegt und/oder bei dem sich ein Darstellungsparameter dynamisch ändert, beispielsweise eine Farbe oder Helligkeit.

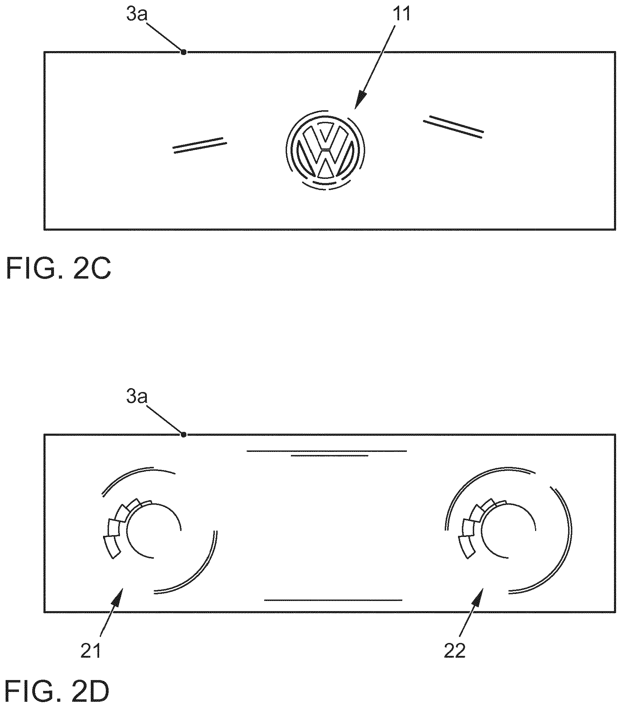

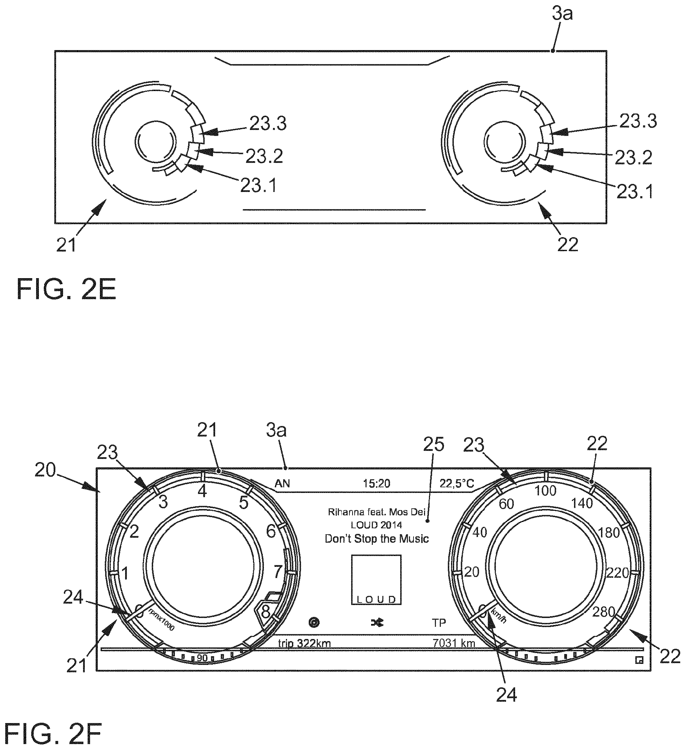

Bei dem in Figur 2C gezeigten Fall wurde ein Übergangssignal empfangen und ein Übergang zur Anzeige der zweiten Darstellung 20 initiiert. Das erste Grafikobjekt 11 verschwindet, was durch ein mittels gestrichelter Linien angedeutetes Ausblenden dargestellt wird. Zugleich erscheint die zweite Darstellung 20, wobei dies durch eine Kombination von Einblenden mit anwachsender Helligkeit und elementarem Aufbau mit einer Bewegung von einzelnen dargestellten Elementen dargestellt wird. Das Erscheinen der zweiten Darstellung umfasst somit einen Bewegungseffekt. Dabei sind in Figur 2D bereits die Umrisse der Anzeigeobjekte 21, 22 der zweiten Darstellung 20 angedeutet. Bei dem in Figur 2E dargestellten Fall wird zudem eine Aufbauanimation für Skalen 23 durch Erscheinen und Verschieben von Skalensegmenten 23.1, 23.2, 23.3 dargestellt: Diese erscheinen im mittleren Bereich der als Rundinstrumente sich bildenden Anzeigeobjekte 21, 22 und bewegen sich dann in einer koordinierten Art von der Mitte hin zum Rand, wo sie eine Zielposition am kreisförmigen Umriss der Anzeigeobjekte 21, 22 einnehmen. Auf diese Weise werden die Skalen 23 stückweise aufgebaut. Bei dem in Figur 2F gezeigten Fall ist für jedes der Anzeigeobjekte 21, 22 ferner ein Zeigerelement 24 erschienen, das in dem Beispiel nach Art eines Lichtstrahls gebildet ist, der eine bestimmte Position der Skala 23 beleuchtet und dadurch einen Wert anzeigt.

Die hier dargestellten Anzeigeobjekte 21, 22 werden nach der Art von Rundinstrumenten gebildet, wie sie in Kombiinstrumenten bekannt sind. Dabei werden die Geschwindigkeit des Fahrzeugs 1 und die Drehzahl eines Motors des Fahrzeugs 1 angezeigt. In weiteren Ausführungsbeispielen können andere Formen und Ausbildungen realisiert werden sowie andere Werte ausgegeben werden. Ferner können mehr als die beiden Anzeigeobjekte 21, 22 vorgesehen sein, beispielsweise ein weiteres Rundinstrument oder ein Objekt zur numerischen Anzeige.

Zwischen den Anzeigeobjekten 21, 22 wird ein Zwischenraum gebildet, der in dem Ausführungsbeispiel als Hintergrunddarstellung ausgebildet ist, wobei die Anzeigeobjekte 21, 22 im Vordergrund angezeigt werden und die Hintergrunddarstellung zu überlagern scheinen. Die Fläche des Zwischenraums dient hier als Anwendungsbereich 25, in dem Ausgabedaten verschiedener Einrichtungen des Fahrzeugs 1 angezeigt werden. Dies kann beispielsweise eine Ausgabe eines Mediaplayers sein, ferner können beispielsweise Ausgabedaten einer Navigation oder anderer Fahrerassistenzsystems ausgegeben werden.

Alternativ oder zusätzlich können in weiteren Ausführungsbeispielen andere Effekte, etwa mittels der farblichen Gestaltung der Anzeige, zum Ausgeben des Erscheinens und Verschwindens von Darstellungen 10, 20 vorgesehen sein.

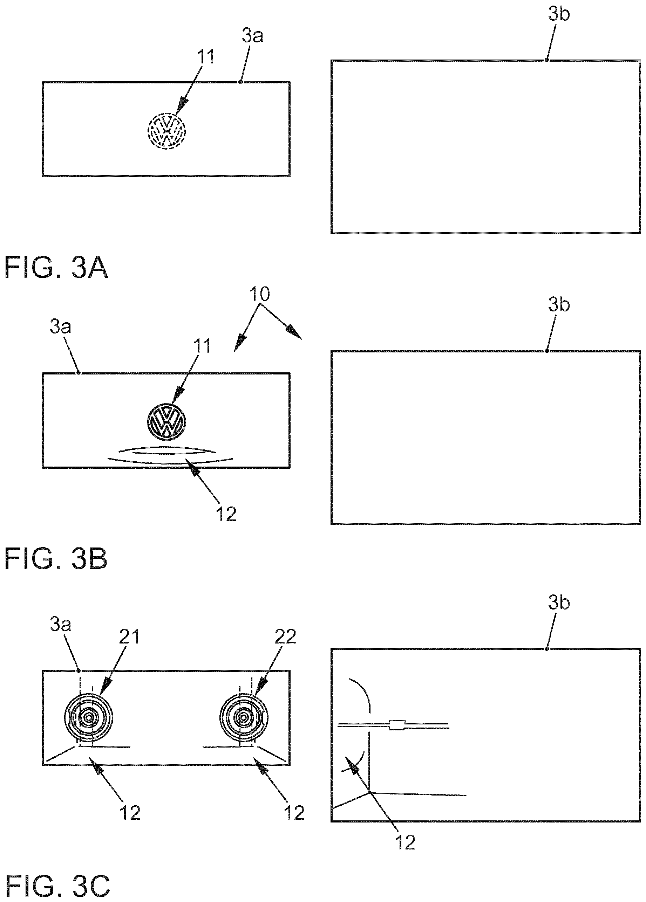

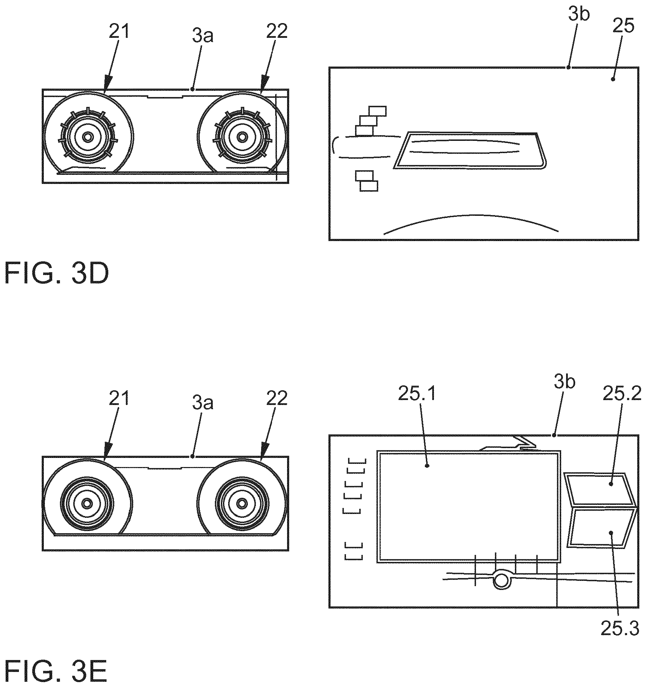

Mit Bezug zu den Figuren 3A bis 3G wird ein Ausführungsbeispiel einer durch das erfindungsgemäße Verfahren erzeugten Anzeige auf zwei Anzeigeflächen erläutert. Dabei wird von dem oben beschriebenen erfindungsgemäßen Fahrzeuginformationssystem und dem erfindungsgemäßen Verfahren zu seinem Betrieb ausgegangen.

Die im Folgenden beschriebene Animation beschreibt ein Aufwachszenario, in welchem das Erscheinen der ersten Darstellung 10 auf der ersten Anzeigefläche 3a, hier ein *Active Info Display,* mit einem Logo als erstem Grafikobjekt 11 angezeigt wird. Ausgehend von dieser ersten Darstellung wird ein Übergang zu der zweiten Darstellung 20 erzeugt, bei dem sich ein Impuls 12 in grafischer Form zur zweiten Anzeigefläche, hier eine *Head Unit,* bewegt.

Dieser Impuls 12 wird synchron in die *Head Unit* weiter geleitet und baut damit die gesamte Struktur der zweiten Darstellung 20 auf. Dabei werden Anwendungsflächen 25.1, 25.2, 25.3 dargestellt, die bestimmten Anwendungen des Rechners 6 zugeordnet sind und auf deren Fläche Ausgabedaten (auch als *Interface-*Inhalte bezeichnet) dieser Anwendungen angezeigt werden können. Die Anwendungsflächen 25.1, 25.2, 25.3 werden dabei zunächst leer dargestellt und bilden dabei ein Gerüst *(Interface-*Struktur*),* das am Schluss der Animation eine Anordnung der geladenen Ausgabedaten vorgibt.

Die zweite Darstellung ist in dem hier gezeigten Fall eine grafische Bedienoberfläche, wobei insbesondere bei der zweiten Anzeigefläche 3b eine Bedienung mittels einer berührungsempfindlichen Oberfläche erfolgen kann.

In einem ersten Schritt, der in den Figuren 3A und 3b gezeigt ist, wird beim Entriegeln des Fahrzeugs 1 das Aktivierungssignal empfangen und das Erscheinen der ersten Darstellung 10 wird eingeleitet. Die Animationssequenz dazu wird von dem nichtflüchtigen Speichermedium 7 erfasst und läuft im Wesentlichen ab wie oben mit Bezug zu den Figuren 2A bis 2F erläutert. Dabei ist in dem Ausführungsbeispiel vorgesehen, dass lediglich eine Anzeige durch die erste Anzeigefläche 3a erfolgt, während die zweite Anzeigefläche 3b dunkel bleibt.

Im Hintergrund wird der Rechner 6 des Fahrzeugs 1 gestartet und ein Hochfahren ausgeführt. Dabei werden Daten geladen und Programme gestartet. Der zeitliche Ablauf des Ladens wird erfasst und es wird insbesondere bestimmt, bis zu welchem Zeitpunkt das Hochfahren voraussichtlich abgeschlossen sein wird. Das Aufwachszenario wird hier so gebildet, dass es im Wesentlichen gleichzeitig mit dem Hochfahren des Rechners 6 beendet ist.

In einem weiteren Schritt wird beim Schließen der Fahrertür das Übergangssignal empfangen und ein Übergang zu der zweiten Darstellung 20 ausgegeben. Die Darstellung des Übergangs und das Erscheinen der zweiten Darstellung 20 umfassen einen Bewegungseffekt von der ersten 3a zur zweiten Anzeigefläche 3b: Dabei wird ein von dem Bereich des ersten Grafikobjekts 11 ausgehender Lichtimpuls 12 dargestellt, der sich in Richtung der zweiten Anzeigefläche 3b ausbreitet, wobei synchron zur Bewegung des Lichtimpulses 12 ein Erscheinen der zweiten Darstellung 20 angezeigt wird. Dabei wird ein Aufbau vom Zentrum der ersten 3a und zweiten Anzeigefläche 3b her erzeugt.

Der von der ersten Anzeigefläche 3a ausgehende Lichtimpuls 12 wird synchron zu einem bestimmten Zeitpunkt in Richtung der zweiten Anzeigefläche 3b weitergeleitet. Anschließend wird synchron zu der Bewegung des Lichtimpulses 12 die zweite Darstellung 20 aufgebaut. Insbesondere wird dabei die Anordnung der Anzeigeflächen 3a, 3b im Fahrzeug 1 berücksichtigt, das heißt, die Bewegungsrichtung des Lichtimpulses 12 wird so gebildet, dass im Fahrzeug 1 ein kontinuierlicher Verlauf der Bewegung dargestellt wird.

Dabei wird, wie in den Figuren 3D bis 3F gezeigt, im Bereich der zweiten Anzeigefläche 3b ein Anwendungsbereich 25 gebildet, der Anwendungsflächen 25.1, 25.2, 25.3 umfasst. Diese Anwendungsflächen werden hier als Bedienkacheln dargestellt, wobei diese insbesondere durch eine Drehbewegung erscheinen, wobei ein "Hochklappen" der Bedienkacheln dargestellt wird.

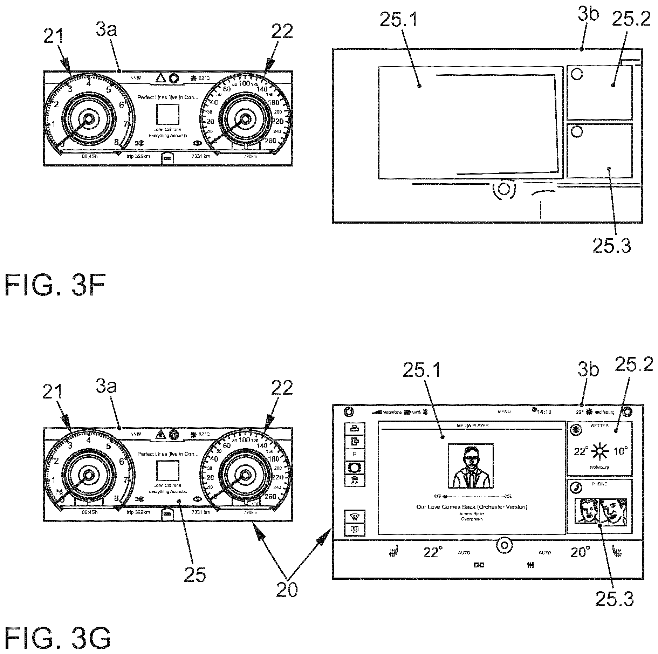

Am Schluss der grafischen Animation bleibt die *Interface-*Struktur ohne Inhalt stehen, es werden insbesondere die Anwendungsflächen 25.1, 25.2, 25.3 als graue Bedienkacheln dargestellt, bei denen keine Ausgabedaten von Anwendungsprogrammen angezeigt werden. Dieser Fall ist in Figur 3F gezeigt. Im Anschluss daran werden, wie in Figur 3G gezeigt, im Bereich der Anwendungsflächen 25.1, 25.2, 25.3 Ausgabedaten von jeweils zugeordneten Anwendungsprogrammen des Rechners 6 angezeigt.

Dabei kann das Verfahren durch eine einheitliche (generische) Animation besonders einfach auf verschiedene Gestaltungen der Bedienoberflächen verschiedener Fahrzeugmodelle angewandt werden. Insbesondere können die erste 10 und zweite Darstellung 20 weitgehend unabhängig von den gerade ausgeführten oder verfügbaren Anwendungsprogrammen gebildet werden, da erste in einem letzten Schritt die Anzeige der Ausgabedaten der Anwendungen erfolgt. Die Anwendungsflächen 25.1, 25.2, 25.3 können dabei als generische Animationsschablone verwendet werden, die auf unterschiedliche Inhalte und Ausgabedaten angepasst werden können. Dabei können vorgegebene Größen für die Anwendungsflächen 25.1, 25.2, 25.3 verwendet werden, die jedoch ohne Inhalt voranimiert werden können und erst am Ende des Verfahrens mit den zu diesem Zeitpunkt geladenen Ausgabedaten der Anwendungen überblendet werden können. Die Anwendungsflächen 25.1, 25.2, 25.3 sind dabei insbesondere als Bedienkacheln beziehungsweise *Interface-*Kacheln ausgebildet.

Durch die Animation des Übergangs von der ersten 10 zur zweiten Darstellung 20 kann eine Überbrückung der Zeitdauer des im Hintergrund laufenden Hochfahrens des Rechners 6 und des Ladevorgangs für die Inhalte erreicht werden, da dieser Vorgang erst nach einer bestimmten Zeitspanne vollständig abgeschlossen ist.

Bei der Animation wird eine Interaktion der beiden Anzeigeflächen 3a, 3b durch eine fließende Bewegung von der ersten 3a zur zweiten Anzeigeflächen 3b ausgegeben. Insbesondere bewegt sich der Lichtimpuls 12 zwischen den Anzeigeflächen 3a, 3b. Hier ist auch die genau koordinierte zeitliche Abstimmung der Anzeigen von Bedeutung, um eine fließende Bewegung zu erreichen.

Der Lichtimpuls 12 kann in verschiedenen Ausführungsbeispielen auf unterschiedliche Weise gebildet werden, wobei verschiedene grafische Elemente genutzt werden können. Beispielsweise kann ein Lichtstrahl dargestellt werden, der sich vom ersten Grafikobjekt 11 aus zu den Seiten der ersten Anzeigefläche 3a bewegt und in der Folge grafische Elemente der zweiten Darstellung 20 "mit sich zieht". Diese grafischen Elemente können etwa quadratische Kacheln sein, die beispielsweise von links nach rechts wandern, es können leuchtende Konturen dargestellt werden, bei denen ein bewegter Lichteffekt um die Umrisse der Anwendungsflächen 25.1, 25.2, 25.3 herum dargestellt wird, oder es kann ein Lichtkegel angezeigt werden, der einen perspektivisch dargestellten "3D-Innenraum" hinter den Bedienkacheln von einer Seite her leuchten lässt und dann zum Ende verschwindet. Beispielsweise kann dabei auch vorgesehen sein, dass die Darstellung je nach Tageszeit in der bestimmten Weise gebildet wird, wobei insbesondere unterschiedliche Lichteffekte verwendet werden können.

### Bezugszeichenliste

- 1: Fahrzeug
- 2: Steuereinheit
- 3a: Erste Anzeigefläche
- 3b: Zweite Anzeigefläche
- 4: Empfangseinheit
- 5: Grafikeinheit
- 6: Rechner
- 7: Nichtflüchtiges Speichermedium
- 8: Signalerzeugungseinheit
- 10: Erste Darstellung
- 11: Erstes Grafikobjekt
- 12: Lichtimpuls
- 20: Zweite Darstellung
- 21: Erstes Anzeigeobjekt
- 22: Zweites Anzeigeobjekt
- 23: Skala
- 23.1, 23.2, 23.3: Skalensegmente
- 24: Zeigerobjekt
- 25: Anwendungsbereich
- 25.1, 25.2, 25.3: Anwendungsfläche

## Patentansprüche

1. Verfahren zum Betreiben eines Fahrzeuginformationssystems eines Fahrzeugs (1), bei dem
ein Aktivierungssignal empfangen wird, wenn eine Vorbereitungshandlung eines Nutzers zur Inbetriebnahme des Fahrzeugs (1) erfasst wird;
in Abhängigkeit von dem Aktivierungssignal Grafikdaten einer Aktivierungsanimation mit einer ersten (10) und einer zweiten Darstellung (20) erzeugt und durch eine Anzeigefläche (3a, 3b) angezeigt werden; wobei
nach dem Empfangen des Aktivierungssignals ein Erscheinen der ersten Darstellung (10) ausgegeben wird; wobei
die erste Darstellung (10) ein erstes Grafikobjekt (11) umfasst; und
anschließend ein Verschwinden der ersten Darstellung (10) und ein Erscheinen der zweiten Darstellung (20) ausgegeben wird;
**dadurch gekennzeichnet, dass**
ferner ein Übergangssignal empfangen wird, wenn eine weitere Vorbereitungshandlung zur Inbetriebnahme des Fahrzeugs (1) erfasst wird; und
das Verschwinden der ersten Darstellung (10) und das Erscheinen der zweiten Darstellung (20) nach dem Empfang des Übergangssignals ausgegeben werden.

2. Verfahren gemäß Anspruch 1,
**dadurch gekennzeichnet, dass**
die erfasste Vorbereitungshandlung einen Annäherungsvorgang, einen Entriegelungsvorgang, ein Türöffnen, ein Einsteigen oder Setzen eines Nutzers oder ein Starten des Fahrzeugs (1) umfasst.

3. Verfahren gemäß einem der vorhergehenden Ansprüche,
**dadurch gekennzeichnet, dass**
das erste Grafikobjekt (11) eine Marke umfasst.

4. Verfahren gemäß einem der vorhergehenden Ansprüche,
**dadurch gekennzeichnet, dass**
zum Erzeugen der Grafikdaten der ersten Darstellung (10) eine Animationssequenz von einem nichtflüchtigen Speichermedium (7) abgerufen wird.

5. Verfahren gemäß einem der vorhergehenden Ansprüche,
**dadurch gekennzeichnet, dass**
die zweite Darstellung (20) ein erstes (21) und ein zweites Anzeigeobjekt (22) umfasst, wobei die Anzeigeobjekte (21, 22) Skalen (23) und Zeigerelemente (24) aufweisen.

6. Verfahren gemäß Anspruch 5,
**dadurch gekennzeichnet, dass**
die Skalen (23) der Anzeigeobjekte (21, 22) Skalenelemente (23.1, 23.2, 23.3) aufweisen, wobei während des Erscheinens der zweiten Darstellung (20) eine Bewegung der Skalenelemente (23.1, 23.2, 23.3) zu Zielpositionen entlang der Skalen (23) der Anzeigeobjekte (21, 22) dargestellt wird.

7. Verfahren gemäß Anspruch 5 oder 6,
**dadurch gekennzeichnet, dass**
das erste (21) und zweite Anzeigeobjekt (22) voneinander beabstandet angeordnet sind, wobei ein Zwischenraum gebildet wird, wobei zeitlich versetzt nach dem Beginn des Erscheinens der Anzeigeobjekte (21, 22) in dem Zwischenraum eine Hintergrunddarstellung angezeigt wird.

8. Verfahren gemäß einem der Ansprüche 5 bis 7,
**dadurch gekennzeichnet, dass**
das erste (21) und/oder zweite Anzeigeobjekt (22) als Rundinstrument ausgebildet ist.

9. Verfahren gemäß einem der vorhergehenden Ansprüche,
**dadurch gekennzeichnet, dass**
ferner Betriebsdaten eines Fahrzeugs (1) erfasst werden und die zweite Darstellung (20) in Abhängigkeit von den erfassten Betriebsdaten erzeugt wird.

10. Verfahren gemäß einem der vorhergehenden Ansprüche,
**dadurch gekennzeichnet, dass**
die Anzeigefläche (3a, 3b) von einem Kombiinstrument eines Fahrzeugs (1) umfasst ist.

11. Verfahren gemäß einem der vorhergehenden Ansprüche,
**dadurch gekennzeichnet, dass**
während des Anzeigens der Aktivierungsanimation ein Startvorgang eines Rechners (6) durchgeführt wird, wobei die Aktivierungsanimation in Abhängigkeit von einem zeitlichen Ablauf des Startvorgangs erzeugt und angezeigt wird.

12. Verfahren gemäß einem der vorhergehenden Ansprüche,
**dadurch gekennzeichnet, dass**
die zweite Darstellung (20) zumindest ein Anzeigeobjekt (21, 22) und einen Anwendungsbereich (25) umfasst, wobei
der Anwendungsbereich (25) Anwendungsflächen (25.1, 25.2, 25.3) umfasst.

13. Verfahren gemäß Anspruch 12,
**dadurch gekennzeichnet, dass**
die Anwendungsflächen (25.1, 25.2, 25.3) der zweiten Darstellung (20) Anwendungen zugeordnet werden und
nach dem Erscheinen der zweiten Darstellung (20) in den Anzeigeflächen (25.1, 25.2, 25.3) Ausgabedaten der Anwendungen angezeigt werden.

14. Fahrzeuginformationssystem eines Fahrzeugs (1) mit
einer Signalerzeugungseinheit (8), durch die eine Vorbereitungshandlung eines Nutzers zur Inbetriebnahme des Fahrzeugs (1) erfassbar ist und in Abhängigkeit von der erfassten Vorbereitungshandlung ein Aktivierungssignal erzeugbar ist;
einer Empfangseinheit (4), durch die das Aktivierungssignal empfangbar ist;
einer Grafikeinheit (5), durch die in Abhängigkeit von dem Aktivierungssignal Grafikdaten einer Aktivierungsanimation mit einer ersten (10) und einer zweiten Darstellung (20) erzeugbar sind;
einer Anzeigefläche (3a, 3b), durch welche die Grafikdaten anzeigbar sind; wobei
nach dem Empfangen des Aktivierungssignals ein Erscheinen der ersten Darstellung (10) ausgebbar ist; wobei
die erste Darstellung (10) ein erstes Grafikobjekt (11) umfasst; und
anschließend ein Verschwinden der ersten Darstellung (10) und ein Erscheinen der zweiten Darstellung (20) ausgebbar ist;
**dadurch gekennzeichnet, dass**
ferner durch die Signalerzeugungseinheit (8) eine weitere Vorbereitungshandlung eines Nutzers zur Inbetriebnahme des Fahrzeugs (1) erfassbar ist und in Abhängigkeit von der erfassten weiteren Vorbereitungshandlung ein Übergangssignal erzeugbar ist;
das Übergangssignal durch die Empfangseinheit (4) empfangbar ist; und
das Verschwinden der ersten Darstellung (10) und das Erscheinen der zweiten Darstellung (20) nach dem Empfangen des Übergangssignals ausgebbar ist.

## Claims

1. A method for operating a vehicle information system of a vehicle (1), in which
an activation signal is received when a preparation action of a user for putting the vehicle (1) into operation is detected;
graphic data of an activation animation having a first representation (10) and a second representation (20) are generated as a function of the activation signal and displayed by a display surface (3a, 3b); wherein
after the activation signal is received, an appearance of the first representation (10) is output; wherein
the first representation (10) comprises a first graphic object (11); and
subsequently, a disappearance of the first representation (10) and an appearance of the second representation (20) are output;
**characterized in that**
a transition signal is further received when a further preparation action for putting the vehicle (1) into operation is detected; and
the disappearance of the first representation (10) and the appearance of the second representation (20) are output after the transition signal is received.

2. The method according to claim 1,
**characterized in that**
the detected preparation action comprises an approach process, an unlocking process, a door opening, a user getting in or sitting down, or starting of the vehicle (1).

3. The method according to any one of the preceding claims,
**characterized in that**
the first graphic object (11) comprises a mark.

4. The method according to any one of the preceding claims,
**characterized in that**
in order to generate the graphic data of the first representation (10), an animation sequence is retrieved from a non-volatile storage medium (7).

5. The method according to any one of the preceding claims,
**characterized in that**
the second representation (20) comprises a first display object (21) and a second display object (22), wherein the display objects (21, 22) have scales (23) and pointer elements (24).

6. The method according to claim 5,
**characterized in that**
the scales (23) of the display objects (21, 22) have scale elements (23.1, 23.2, 23.3), wherein a movement of the scale elements (23.1, 23.2, 23.3) to target positions along the scales (23) of the display objects (21, 22) is shown during the appearance of the second representation (20).

7. The method according to claim 5 or 6,
**characterized in that**
the first display object (21) and second display object (22) are arranged at a distance from one another, wherein an intermediate space is formed, wherein a background representation is displayed in the intermediate space with a time delay after the beginning of the appearance of the display objects (21, 22).

8. The method according to any one of claims 5 to 7,
**characterized in that**
the first display object (21) and/or second display object (22) is designed as a round instrument.

9. The method according to any one of the preceding claims,
**characterized in that**
operating data of a vehicle (1) are also detected, and the second representation (20) is generated as a function of the detected operating data.

10. The method according to any one of the preceding claims,
**characterized in that**
the display surface (3a, 3b) is comprised by an instrument cluster of a vehicle (1).

11. The method according to any one of the preceding claims,
**characterized in that**
a start operation of a computer (6) is performed while displaying the activation animation, wherein the activation animation is generated and displayed as a function of a time sequence of the start operation.

12. The method according to any one of the preceding claims,
**characterized in that**
the second representation (20) comprises at least one display object (21, 22) and one application field (25), wherein
the application field (25) comprises application areas (25.1, 25.2, 25.3).

13. The method according to claim 12,
**characterized in that**
the application areas (25.1, 25.2, 25.3) of the second representation (20) are assigned to applications, and
after the second representation (20) appears, output data of the applications are displayed in the display areas (25.1, 25.2, 25.3).

14. A vehicle information system of a vehicle (1) having
a signal generation unit (8) by means of which a preparation action of a user for putting the vehicle (1) into operation can be detected and an activation signal can be generated as a function of the detected preparation action;
a receiving unit (4) by means of which the activation signal can be received;
a graphics unit (5) by means of which graphic data of an activation animation having a first representation (10) and a second representation (20) can be generated as a function of the activation signal;
a display area (3a, 3b) by which the graphic data can be displayed; wherein
after the activation signal is received, an appearance of the first representation (10) can be output; wherein
the first representation (10) comprises a first graphic object (11); and
subsequently, a disappearance of the first representation (10) and an appearance of the second representation (20) can be output;
**characterized in that**
furthermore, a further preparation action of a user for putting the vehicle (1) into operation can be detected by the signal generation unit (8), and a transition signal can be generated as a function of the detected further preparation action;
the transition signal can be received by the receiving unit (4); and
the disappearance of the first representation (10) and the appearance of the second representation (20) can be output after the transition signal is received.

## Revendications

1. Procédé de fonctionnement d'un système d'informations de véhicule d'un véhicule (1), dans lequel
un signal d'activation est reçu, lorsqu'une activité préparatoire d'un utilisateur pour la mise en service du véhicule (1) est détectée ;
en fonction du signal d'activation, des données graphiques d'une animation d'activation sont générées avec une première (10) et une seconde représentation (20) et affichées par le biais d'une surface d'affichage (3a, 3b) ; dans lequel
après la réception du signal d'activation, une apparition de la première représentation (10) est émise ; dans lequel
la première représentation (10) comprend un premier objet graphique (11) ; et
ensuite une disparition de la première représentation (10) et une apparition de la seconde représentation (20) sont émises ;
**caractérisé en ce que**
un signal de transition est en outre reçu, lorsqu'une autre activité préparatoire pour la mise en service du véhicule (1) est détectée ; et
la disparition de la première représentation (10) et l'apparition de la seconde représentation (20) sont émises après la réception du signal de transition.

2. Procédé selon la revendication 1,
**caractérisé en ce que**
l'activité préparatoire détectée comprend un processus d'approche, un processus de déverrouillage, une ouverture de porte, une action de monter ou de s'asseoir par un utilisateur ou un démarrage du véhicule (1).

3. Procédé selon l'une quelconque des revendications précédentes,
**caractérisé en ce que**
le premier objet graphique (11) comprend une marque.

4. Procédé selon l'une quelconque des revendications précédentes,
**caractérisé en ce que**
pour la génération des données graphiques de la première représentation (10), une séquence d'animation est appelée depuis un support de stockage non volatil (7).

5. Procédé selon l'une quelconque des revendications précédentes,
**caractérisé en ce que**
la seconde représentation (20) comprend un premier (21) et un second objet d'affichage (22), dans lequel les objets d'affichage (21, 22) présentent des échelles (23) et des éléments pointeurs (24).

6. Procédé selon la revendication 5,
**caractérisé en ce que**
les échelles (23) des objets d'affichage (21, 22) présentent des éléments d'échelle (23.1, 23.2, 23.3), dans lequel pendant l'apparition de la seconde représentation (20), un mouvement des éléments d'échelle (23.1, 23.2, 23.3) vers des positions cibles le long des échelles (23) des objets d'affichage (21, 22) est représenté.

7. Procédé selon la revendication 5 ou 6,
**caractérisé en ce que**
le premier (21) et le second objet d'affichage (22) sont agencés à distance l'un de l'autre, dans lequel un espace intermédiaire est formé, dans lequel une représentation d'arrière-plan est affichée de manière décalée dans le temps après le début de l'apparition des objets d'affichage (21, 22) dans l'espace intermédiaire.

8. Procédé selon une quelconque des revendications 5 à 7,
**caractérisé en ce que**
le premier (21) et/ou le second objet d'affichage (22) est/sont formé(s) comme un instrument rond.

9. Procédé selon l'une quelconque des revendications précédentes,
**caractérisé en ce que**
en outre, des données de fonctionnement d'un véhicule (1) sont détectées et la seconde représentation (20) est générée en fonction des données de fonctionnement détectées.

10. Procédé selon l'une quelconque des revendications précédentes,
**caractérisé en ce que**
la surface d'affichage (3a, 3b) est comprise dans un instrument combiné d'un véhicule (1).

11. Procédé selon l'une quelconque des revendications précédentes,
**caractérisé en ce que**
pendant l'affichage de l'animation d'activation, un processus de démarrage d'un ordinateur (6) est réalisé, dans lequel l'animation d'activation est générée et affichée en fonction d'un déroulement temporel du processus de démarrage.

12. Procédé selon l'une quelconque des revendications précédentes,
**caractérisé en ce que**
la seconde représentation (20) comprend au moins un objet d'affichage (21, 22) et un champ d'application (25), dans lequel
le champ d'application (25) comprend des surfaces d'application (25.1, 25.2, 25.3).

13. Procédé selon la revendication 12,
**caractérisé en ce que**
des applications sont attribuées aux surfaces d'application (25.1, 25.2, 25.3) de la seconde représentation (20) et
après l'apparition de la seconde représentation (20) dans les surfaces d'affichage (25.1, 25.2, 25.3), des données de sortie des applications sont affichées.

14. Système d'informations de véhicule d'un véhicule (1) comprenant
une unité de génération de signal (8), permettant de détecter une activité préparatoire d'un utilisateur pour la mise en service du véhicule (1) et de générer un signal d'activation en fonction de l'activité préparatoire détectée ;
une unité de réception (4), permettant de recevoir le signal d'activation ;
une unité graphique (5), permettant de générer, en fonction du signal d'activation, des données graphiques d'une animation d'activation avec une première (10) et une seconde représentation (20) ;
une surface d'affichage (3a, 3b), permettant d'afficher les données graphiques ; dans lequel
après la réception du signal d'activation, une apparition de la première représentation (10) peut être émise ; dans lequel
la première représentation (10) comprend un premier objet graphique (11) ; et
ensuite une disparition de la première représentation (10) et une apparition de la seconde représentation (20) peuvent être émises ;
**caractérisé en ce que**
en outre, l'unité de génération de signal (8) permet de détecter une autre activité préparatoire d'un utilisateur pour la mise en service du véhicule (1) et de générer un signal de transition en fonction de l'autre activité préparatoire détectée ;
le signal de transition peut être reçu par l'unité de réception (4) ; et
la disparition de la première représentation (10) et l'apparition de la seconde représentation (20) peuvent être émises après la réception du signal de transition.
